# EUROPÄISCHE PATENTSCHRIFT

(11) **EP 1 663 749 B1**
(45) Veröffentlichungstag und Bekanntmachung des Hinweises auf die Patenterteilung: **14.09.2011**
(21) Anmeldenummer: 04762520.7
(22) Anmeldetag: 27.07.2004
(51) Int. Cl.: B60T 8/40, B60T 8/36, B60T 7/04, B60T 17/22

(54) **ELEKTROHYDRAULISCHE BREMSANLAGE**
ELECTROHYDRAULIC BRAKING SYSTEM
SYSTEME DE FREINAGE ELECTROHYDRAULIQUE

(30) Priorität: 17.09.2003 DE 10342937
(43) Veröffentlichungstag der Anmeldung: 07.06.2006
(73) Patentinhaber: ROBERT BOSCH GMBH, 70442 Stuttgart (DE)
(72) Erfinder: GOTTWICK, Ulrich, 70192 Stuttgart (DE); KUNZ, Michael, 70839 Gerlingen (DE)
(86) Internationale Anmeldenummer: PCT/DE2004/001675
(87) Internationale Veröffentlichungsnummer: WO 2005/035330

(56) Entgegenhaltungen:
- DE-A- 3 511 535
- DE-A- 10 039 670
- DE-A- 19 833 410
- DE-A1- 10 159 788
- DE-A1- 19 548 248
- DE-A1- 19 636 432
- DE-C- 19 817 190
- US-A- 5 855 417
- US-A- 6 079 793
- PATENT ABSTRACTS OF JAPAN Bd. 0165, Nr. 63 (M-1342), 4. Dezember 1992 (1992-12-04) & JP 4 218458 A (TOYOTA MOTOR CORP), 10. August 1992 (1992-08-10)

## Beschreibung

### Stand der Technik

Die Erfindung geht aus von einer elektrohydraulischen Bremsanlage entsprechend der Gattung des Anspruchs 1.

Eine derartige Bremsanlage ist beispielsweise bekannt aus der DE 35 11 535 A1. Diese bekannte Bremsanlage weist eine muskelkraftbetätigbare Hilfsbremse und eine fremdkraftbetätigbare Betriebsbremse auf. Zur Umschaltung der Bremsanlage vom Betriebsbremszustand in den Hilfsbremszustand sind sogenannte Betriebsartenumschaltventile vorhanden. Die Anzahl der Betriebsartenumschaltventile entspricht der Anzahl vorhandener Bremskreise. Darüber hinaus ist zur Simulation des Pedalwegs während des Betriebsbremszustands der Bremsanlage, bei dem eine Druckmittelverbindung zwischen einem Hauptbremszylinder und einer Radbremse von der erwähnten Ventilanordnung unterbrochen ist, eine mit dem Hauptbremszylinder verbundene Kolben/Zylinder-Einheit vorhanden. Diese nimmt das im Hauptbremszylinder aufgrund der Fußbetätigung durch den Fahrer beim Bremsen verdrängte Druckmittelvolumen auf. Die Kolben/Zylinder-Einheit ist im Hilfsbremszustand der Bremsanlage hydraulisch abgesperrt, damit das im Hauptbremszylinder verdrängte Druckmittelvolumen in möglichst großem Umfang zum Druckaufbau an den Radbremsen zur Verfügung steht. Die Absperrung der Kolben/Zylinder-Einheit erfolgt durch eines der vorhandenen Betriebsartenumschaltventile. Die bekannten Betriebsartenumschaltventile sind hydraulisch betätigt und mit elektromechanischen Schalteinrichtungen ausgerüstet. Letztere erlauben eine elektronische Überwachung der mechanischen Schaltbewegung dieser Betriebsartenumschaltventile.

Aus der JP 4 218 458 A ist eine elektrohydraulische Bremsanlage bekannt, bei der neben zwei Betriebsartenumschaltventilen in den Bremskreisen ein separates Ventil zur Absperrung einer Kolben/Zylinder-Einheit vorgesehen ist. Alle Ventile sind durch ein Steuergerät elektromechanisch umschaltbar. Eine ebenso ausgestatte Bremsanlage zeigt auch die DE 196 36 432 A1.

Die US 6 079 793 A zeigt eine elektrohydraulische Bremsanlage mit Kolben/Zylinder-Einheiten in beiden vorhandenen Bremskreisen. Jeder Kolben/Zylinder-Einheit ist ein eigenes Absperrventil zugeordnet. Zudem weist jeder Bremskreis getrennt von diesem Absperrventil ein zusätzliches Betriebsartenumschaltventil auf.

Die US 5 855 417 A offenbart darüber hinaus eine Bremsanlage, bei der anstelle von Schaltventilen aufwändige Proportionalregelventile mit 5 Anschlüssen und 3 Stellungen zur Bremsdruckmodulation, zur Umschaltung der Bremsanlage vom Betriebsbremszustand in den Hilfsbremszustand und zum Druckausgleich zwischen hydraulisch miteinander gekoppelten Radbremsen sowie zur Absperrung von Kolben/Zylinder-Einheiten eingesetzt werden.

Die DE 198 17 190 C1 offenbart eine elektrohydraulische Bremsanlage, wobei ein Drucksensor zwischen einem Betriebsartenum schaltventil und einer Kolben/Zylinder-Einheit angeordnet ist, der den Druck in einer Hauptbremszylin der Kammer misst.

### Vorteile der Erfindung

Eine Bremsanlage entsprechend den Merkmalen des Anspruchs 1 weist demgegenüber den Vorteil auf, dass sie unter Verwendung möglichst weniger Einzelteile äußerst kompakt und kostengünstig baut. Anhand eines Drucksensors, der zwischen dem die Kolben/Zylinder-Einheit steuernden Ventil der Ventilanordnung und dieser Kolben/Zylinder-Einheit angeordnet ist, ist es möglich, die Absperrfunktion des Betriebsartenumschaltventils während des Betriebsbremszustands der Bremsanlage hydraulisch zu überwachen und auftretende Fehler bereits im Vorfeld dem Fahrer mitzuteilen. Die bauraumsparende Bauweise der Bremsanlage ergibt sich gemäß Anspruch 2 insbesondere auch dadurch, dass zumindest die Ventilanordnung zur Umschaltung der Bremsanlage vom Betriebsbremszustand in den Hilfsbremszustand, eine extern ansteuerbare Druckerzeugereinheit und eine Einrichtung zur Modulation des Bremsdrucks in einem gemeinsamen Gehäuseblock angeordnet sind. Die Merkmale des Anspruchs 3 erlauben es, dass an der Bremsbetätigungseinheit während des Betriebsbremszustands keine Rückwirkungen vom Regelverhalten der elektrohydraulischen Bremsanlage durch den Fahrer wahrnehmbar sind, während die Merkmale des Anspruchs 4 genau diese Rückwirkungen ermöglichen. Dadurch ist die vorgeschlagene Bremsanlage an die jeweiligen Kundenanforderungen spezifisch anpassbar. Anspruch 5 schlägt für eine elektronische Überwachung der Absperrfunktion eine besonders vorteilhafte Bauweise eines Wegeventils vor.

Weitere Vorteile oder vorteilhafte Weiterbildungen der Erfindung ergeben sich aus der nachfolgenden Beschreibung.

### Zeichnung

Die Erfindung ist anhand einer einzigen Figur dargestellt und in der nachfolgenden Beschreibung näher erläutert. Das Ausführungsbeispiel der Erfindung ist anhand eines hydraulischen Schaltplans schematisch vereinfacht dargestellt.

### Beschreibung der Ausführungsbeispiele

Die erfindungsgemäßen elektrohydraulische Bremsanlage 10 entsprechend der Figur umfasst eine muskelkraftbetätigte Hilfsbremse und eine fremdkraftbetätigbare Betriebsbremse. Beide Teilsysteme dieser Bremsanlagen nutzen gemeinsame Komponenten, sind jedoch durch sogenannte Betriebsartenumschaltventile 12, 13 voneinander getrennt. Die Hilfsbremse ist lediglich im Falle einer Funktionsstörung der Betriebsbremse aktiv.

Die elektrohydraulische Bremsanlage 10 hat neben einem Hauptbremszylinder 14 mit einem geschlossenen Vorratsbehälter 16 für Bremsflüssigkeit und einer Betätigungseinheit in Form eines vom Fahrer durch Muskelkraft betätigbaren Bremspedals 18 ein Hydraulikaggregat 20 zur Steuerung der Bremsdrücke an insgesamt vier an dieses Hydraulikaggregat 20 angeschlossenen Radbremsen 22 sowie ein elektronisches Steuergerät 24, welches die Komponenten des Hydraulikaggregats 20 elektrisch ansteuert. Die Radbremsen 22 sind entsprechend ihrer Anordnung an einem mit der Bremsanlage 10 ausgestatteten Fahrzeug mit VL, VR, HL und HR bezeichnet.

Das Hydraulikaggregat 20 weist an einem vorzugsweise strangpresstechnisch hergestellten Block aus einem Nicht-Eisen-Metallwerkstoff (nicht dargestellt) zwei Betriebsartenumschaltventile 12,13, einen Pedalwegsimulator 26, eine Druckquelle 28 mitsamt ihrem Antrieb 30, ein Druckbegrenzungsventil 32, einen Speicher 34, eine Druckmodulationseinrichtung 36 aus insgesamt acht Proportional-Wegeventilen 38, Balanceventile 40 und Drucksensoren 42 auf. Dazu ist der Block des Hydraulikaggregats 20 durch spanende Nachbearbeitung mit Druckmittelkanälen und Aufnahmen für die oben genannten Komponenten versehen. Insbesondere durch eine Anordnung des Pedalwegsimulators 26 an diesem Hydraulikaggregat 20 verbessert sich der erforderliche Einbauraum für die erfindungsgemäße Bremsanlage 10 in einem Kraftfahrzeug deutlich.

Die vier Radbremsen 22 sind in zwei voneinander getrennte Bremskreise I und II geschaltet. Jedem Bremskreis ist im Hauptbremszylinder 14 eine Druckkammer 44, 45 zugeordnet. Letztere sind axial hintereinander angeordnet und weisen jeweils einen eigenen Druckkolben 46, 47 auf. Ein erster Druckkolben 46 ist vom Bremspedal 18 betätigt, der zweite Druckkolben 47 ist als Schwimmkolben ausgebildet, der sich gegenüber dem ersten Druckkolben 46 mittels einer Feder 48 abstützt. Eine auf den zweiten Druckkolben 47 einwirkende zweite Druckfeder 49 stützt sich an einem Gehäuse 50 des Hauptbremszylinders 14 ab und bewirkt die Rückstellung des Bremspedals 18 in seine Ausgangsstellung nach der Rücknahme der Bremsbetätigungskraft durch den Fahrer. Am Hauptbremszylinder 14 sind darüber hinaus zwei Sensoren 52, 53 angebracht, die entsprechend ihrer Funktion als Pedalwegsensor 52 und als Bremslichtschalter 53 bezeichnet sind. Der Pedalwegsensor 52 erfasst den Betätigungsweg des Bremspedals 18 und wandelt dieses Wegsignal in ein Spannungssignal um, während der Bremslichtschalter 53 ein Signal abgibt, sobald aufgrund des Druckaufbaus in der ersten Druckkammer 44 des Hauptbremszylinders 14 eine Bremsleuchte des Fahrzeugs aufleuchtet. Beide Signale werden im elektronischen Steuergerät 24 verarbeitet und dienen der Steuerung der Bremsanlage 10.

Der an die erste bremspedalseitige Druckkammer 44 angeschlossene Bremskreis I führt vom Hauptbremszylinder 14 aus zum Betriebsartenumschaltventil 12 und von dort unmittelbar zu den Radbremsen 22 der Vorderachse VL und VR. Im muskelkraftbetätigten Hilfsbremszustand der Bremsanlage 10, d. h. bei nicht betätigtem Betriebsartenumschaltventil 12, ist damit ein Druckaufbau in den Radbremsen 22 durch die Muskelkraft des Fahrers gewährleistet.

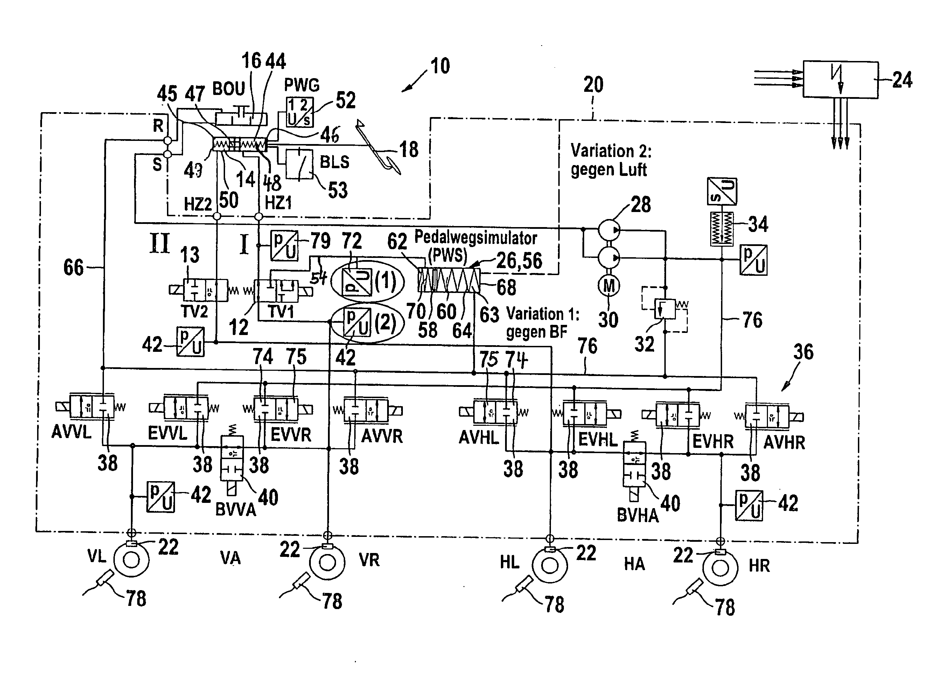

Die Bremsanlage 10 weist darüber hinaus den sogenannten Pedalwegsimulator 26 auf. Dieser ist im Falle des Ausführungsbeispiels nach Figur 1 in einem Abzweig 54 zum ersten Bremskreis I angeordnet und wird von einer Kolben/Zylinder-Einheit 56 gebildet. Ein Kolben 58 des Pedalwegsimulators 26 teilt einen Zylinderraum 60 in zwei Kammern 62, 63, von denen eine mit Druckmittel aus dem Hauptbremszylinder 14 beaufschlagbar ist. Die davon abgewandt liegende zweite Kammer 63 nimmt eine den Kolben 58 betätigende Rückstellfeder 64 auf und kann alternativ mit Druckmittel befüllt sein (Variation 1; dargestellt mit durchgezogener Linie), in dem sie mit einem Rücklaufkanal 66 im Block des Hydraulikaggregats 20 verbunden ist, in welchem Druckmittel von den Radbremsen 22 zum Vorratsbehälter 16 zurück fließt, oder kann zur Umgebungsatmosphäre hin belüftet sein (Variation 2; gestrichelte Darstellung). In der Figur sind der Einfachheit halber beide Variationen nebeneinander dargestellt. Mit der am Kolben 58 angreifenden erwähnten Rückstellfeder 64 kann die Kraft-/Weg-Charakteristik des Pedalwegsimulators 26 dem jeweiligen Einsatzfall entsprechend appliziert werden.

Die Beaufschlagung des Pedalwegsimulators 26 mit Druckmitteln ist erfindungsgemäß von einem der beiden Betriebsartenumschaltventile 12, 13 gesteuert. Beide Betriebsartenumschaltventile 12, 13 sind in zwei Schaltstellungen umschaltbar. Diese Umschaltung erfolgt durch elektronische Ansteuerung durch das Steuergerät 24, entgegen der Kraft einer Rückstellfeder. In der nicht angesteuerten Grundstellung geben die Betriebsartenumschaltventile 12, 13 eine Druckmittelverbindung vom Hauptbremszylinder 14 zu den Radbremsen 22 der Vorderachse frei. Das erfindungsgemäß gleichzeitig den Pedalwegsimulator 26 steuernde Betriebsartenumschaltventil 12 weist insgesamt drei hydraulische Anschlüsse auf, während das zweite Betriebsartenumschaltventil 13 mit lediglich zwei Anschlüssen auskommt. Letzteres Betriebsartenumschaltventil 13 ist von einer Durchgangsstellung in eine Sperrstellung umschaltbar. Das den Pedalwegsimulator 26 steuernde Betriebsartenumschaltventil 12 ist dagegen von einer Durchlassstellung, bei der zwischen dem Hauptbremszylinder 14 und wenigstens einer Radbremse 22 eine Druckmittelverbindung besteht, während gleichzeitig eine Hydraulikverbindung vom Hauptbremszylinder 14 zum Pedalwegsimulator 26 gesperrt ist, in eine Schaltstellung verbringbar, bei der diese Verhältnisse invertiert sind. Im Abzweig 54, zwischen dem den Pedalwegsimulator 26 steuernden Betriebsartenumschaltventil 12 und dem Pedalwegsimulator 26 selbst, befindet sich erfindungsgemäß ein zusätzlicher Drucksensor 72 zur Erfassung des im Pedalwegsimulator 26 herrschenden Druckniveaus. Abgesehen von diesem Drucksensor 72 weist die Bremsanlage 10 weitere Drucksensoren 42 zur Erfassung des Druckniveaus an jeder der einzelnen Radbremsen 22 auf. Zusätzlich ist ein Drucksensor 79 zwischen den Hauptbremszylinder 14 und das den Pedalwegsimulator 26 steuernde Betriebsartenumschaltventil 12 geschaltet.

Die fremdkraftbeaufschlagte Betriebsbremse ist gebildet von einer elektromotorisch angetriebenen Druckquelle 28, einen dieser Druckquelle 28 nachgeschalteten Speicher 34, vorzugsweise einem Membranspeicher und einem Druckbegrenzungsventil 32 zum Abbau von Druckspitzen, die ein durch die Bauart des Druckbegrenzungsventils 32 bedingtes Niveau überschreiten. Beispielhaft ist eine von einem gemeinsamen Antrieb 30 beaufschlagte Doppelpumpe als Druckquelle 28 eingesetzt.

Die Druckquelle 28 saugt über einen Druckmittelkanal im Hydraulikaggregat 20 Druckmittel aus dem Vorratsbehälter 16 an und pumpt dieses in den hydraulischen Speicher. Die gespeicherte hydraulische Energie steht dann der Druckmodulationseinrichtung 36 zu Verfügung, welche den einzelnen Radbremsen 22 hydraulisch vorgeschaltet ist. Dabei handelt es sich um insgesamt acht elektromagnetisch gegen Federkraft ansteuerbare 2/2-Proportional-Wegeventile 38, die in ihrer nicht dargestellten Grundposition eine Sperrstellung 74 und in ihrer bestromten Schaltstellung eine Durchlassstellung 75 einnehmen. Jeweils zwei dieser Modulationsventile 38 sind einer Radbremse 22 zugeordnet, wobei wiederum jeweils eines der beiden Modulationsventile 38 einer Radbremse 22 mit einem von der Druckquelle 28 kommenden Zulauf 76 und das zweite Modulationsventil 38 mit dem Rücklaufkanal 66 zum Vorratsbehälter 16 verbunden ist. Durch Ansteuerung der beiden Modulationsventile 38 einer Radbremse 22 mittels des elektronischen Steuergeräts 24 lässt sich nachvollziehbarerweise das Druckniveau an der jeweiligen Radbremse 22 stufenlos regulierten, wobei sich die Regelung an den jeweiligen Schlupfverhältnissen am entsprechenden Rad eines Fahrzeugs orientiert. Diese Schlupfverhältnisse lassen sich anhand von Raddrehzahlsensoren 78, die an jedem Fahrzeugrad angebracht sind, feststellen und im Steuergerät 24 zu Ansteuersignalen, unter anderem für die Modulationsventile 38, weiterverarbeiten.

Im Betriebsbremszustand, d. h. bei aktiver Fremdkraftbremsung, befinden sich die Betriebsartenumschaltventile 12, 13 in ihrer Schaltstellung und sperren, wie erläutert, den Hauptbremszylinder 14 gegenüber den Radbremsen 22 ab. Gleichzeitig besteht dabei eine Verbindung von einer der Druckkammern 44, 45 des Hauptbremszylinders 14 zum Pedalwegsimulator 26, sodass Druckmittel dahin abströmen kann. Der Fahrer hat dadurch ein gewohntes Pedalgefühl, obwohl die Pedalbetätigung ausschließlich zur Erfassung seines Bremswunsches dient, nicht jedoch zur Bereitstellung des Bremsdrucks selbst. Dieser Bremsdruck wird im Betriebsbremszustand, wie erwähnt, von der Druckquelle 28 bereitgestellt. Der Bremswunsch des Fahrers wird durch Auswertung der Signale des Bremslichtschalters 53, des Drucksensors 79 und des Pedalwegsensors 52 erfasst und zu Ansteuersignalen für die Druckquelle 28, die Betriebsartenumschaltventile 12, 13 und die Modulationsventile 38 der Druckmodulationseinrichtung 36 ausgewertet.

Die Bremsanlage 10 weist davon abgesehen noch die sogenannten Balanceventile 40 auf. Jeder Achse eines Fahrzeugs ist ein solches Balanceventil 40 zugeordnet. Dabei handelt es sich um elektromagnetisch gegen Federkraft betätigbare, normal offene 2/2-Wege-Umschaltventile, welche eine Druckmittelverbindung zwischen den beiden Radbremsen 22 einer Fahrzeugachse regeln. In nicht angesteuerter Grundstellung ist diese Verbindung geöffnet, sodass sich identischer Bremsdruck an beiden Radbremsen 22 einer Fahrzeugachse einstellt. Durch Bestromung der Balanceventile 40 wird diese Verbindung unterbrochen, und die Radbremsen 22 einer Achse lassen sich radindividuell regeln.

Der erfindungsgemäß dem Pedalwegsimulator 26 vorgeschaltete Drucksensor 72 dient der beschriebenen Bremsanlage 10 zur hydraulischen Überwachung der Absperrfunktion des Betriebsartenumschaltventils 12. Durch ein frühzeitiges Entstromen des den Pedalwegsimulator 26 steuernden Betriebsartenumschaltventils 12 bei schneller Rücknahme der Betätigung des Bremspedals 18 durch den Fahrer kann durch Auswertung des Signals des dem Pedalwegsimulator 26 vorgeschalteten Drucksensors 72 überprüft werden, ob der im Pedalwegsimulator 26 herrschende Druck durch das Umschaltventil 12 im Pedalwegsimulator 26 gehalten werden kann und damit die Absperrfunktion des Betriebsartenumschaltventils gewährleistet ist, oder ob, wie im Fehlerfall, der im Pedalwegsimulator 26 eingesperrte Druck schnell abfällt. Diese Überwachung erfolgt während des Betriebsbremszustands der Bremsanlage 10, wodurch auftretende Fehler bereits im Vorfeld, also vor einer Umschaltung in den Hilfsbremszustand festgestellt und dem Fahrer in geeigneter Weise angezeigt werden kann. Damit wird die Betriebssicherheit der Bremsanlage 10 wesentlich erhöht.

Im Ausführungsbeispiel kann die Kammer 63 des Pedalwegsimulators 26, die nicht mit dem Druckmittel aus dem Hauptbremszylinder 14 beaufschlagt sind, mit dem Rücklaufkanal 66 zum Vorratsbehälter 16 verbunden sein. Bei betätigtem Betriebsartenumschaltventil 12, 13, also im Betriebsbremszustand der Bremsanlage 10, besteht auf diese Weise eine hydraulische Rückkopplung zwischen der Radbremse 22 und dem Hauptbremszylinder 14, aufgrund der die Regelvorgänge, die an der entsprechenden Radbremse 22 ablaufen, durch leichte Pulsationsbewegungen am Bremspedal 18 durch den Fahrer wahrnehmbar sind. Dies ist von einigen Fahrzeugherstellern gewünscht.

Andere Fahrzeughersteller sehen von dieser Rückmeldung an den Fahrer aus Komfortgründen ab. Dies lässt sich mit der vorgeschlagenen Bremsanlage 10 erreichen, indem die nicht vom Druckmittel des Hauptbremszylinders 14 beaufschlagte Kammer 63 des Pedalwegsimulators 26 mit der Umgebungsatmosphäre verbunden wird. Allerdings muss in diesem Fall mehr Aufwand für eine wirksame Abdichtung des Kolbens 58 des Pedalwegsimulators 26 gegen externe Leckage aufgewendet werden.

Selbstverständlich sind weitere Abwandlungen oder Ergänzungen am beschriebenen Ausführungsbeispiel möglich, ohne dass vom Grundgedanken der Erfindung abgewichen wird. In diesem Zusammenhang sei erwähnt, dass es selbstverständlich möglich wäre, die Funktionen des den Pedalwegsimulator 26 steuernden Betriebsartenumschaltventils 12 aufzulösen und auf zwei gemeinsam elektronisch ansteuerbare 2/2-Wege-Umschaltventile zu übertragen. Darüber hinaus wäre es denkbar den Pedalwegsimulator 26 hydraulisch an die den Schwimmkolben 47 führende zweite Druckkammer 45 des Hauptbremszylinders 14 anzuschließen und anstelle des Betriebsartenumschaltventils 12 entsprechend das Betriebsartenumschaltventil 13 als 3/2-Wegeventil auszubilden.

## Patentansprüche

1. Elektrohydraulische Bremsanlage (10) mit einer muskelkraftbetätigbaren Hilfsbremse, welche einen Hauptbremszylinder (14) und eine Betätigungseinrichtung (18) für den Hauptbremszylinder (14) aufweist,
mit einer fremdkraftbetätigbaren Betriebsbremse, welche ein elektronisches Steuergerät (24) und eine vom Steuergerät (24) ansteuerbare Druckerzeugereinheit aus Antrieb (30) und Druckquelle (28) aufweist und mit einer Ventilanordnung (12, 13) zur Umschaltung der Bremsanlage (10) vom Betriebsbremszustand in den Hilfsbremszustand, die insgesamt eine der Anzahl vorhandener Bremskreise entsprechende Anzahl umschaltbarer Betriebsartenumschaltventile umfasst,
mit wenigstens einer hydraulischen Radbremse (22),
wenigstens einer, der Ventilanordnung (12, 13) zur Umschaltung der Bremsanlage (10) und der wenigstens einen Radbremse (22) zwischengeschalteten, vom Steuergerät (24) ansteuerbaren Einrichtung zur Modulation des Bremsdrucks (36) an der Radbremse (22)
und mit einer Kolben/Zylinder-Einheit (56) zur Simulation des Pedalwegs während des Betriebsbremszustands, welche im Hilfsbremszustand hydraulisch absperrbar mit dem Hauptbremszylinder (14) verbunden ist,
wobei eine zur Beaufschlagung der Kolben/Zylinder-Einheit (56) mit Druckmittel vorgesehene Leitungsverbindung (54) von einem der Betriebsartenumschaltventile der Ventilanordnung (12, 13) zur Umschaltung der Bremsanlage (10) gesteuert ist, **dadurch gekennzeichnet**,
die Betriebsartenumschaltventile der Ventilanordnung (12, 13) elektronisch ansteuerbar sind und
dass zwischen dem die Kolben/Zylinder-Einheit (56) steuernden Betriebsartenumschaltventil (12) der Ventilanordnung (12, 13) und der Kolben/Zylinder-Einheit (56) ein Drucksensor (72) angeordnet ist, der die Absperrfunktion des betriebsartenumschaltventils (12) hydraulisch überwacht.

2. Elektrohydraulische Bremsanlage nach Anspruch 1, **dadurch gekennzeichnet, dass** die Kolben/Zylinder-Einheit (56) wenigstens zusammen mit der Ventilanordnung (12, 13) zur Umschaltung der Bremsanlage (10), der extern ansteuerbaren Druckerzeugereinheit (28, 30) und der Einrichtung zur Modulation des Bremsdrucks (36) in einem gemeinsamen Hydraulikaggregat (20) angeordnet sind.

3. Elektrohydraulische Bremsanlage nach Anspruch 1 oder 2, wobei ein Kolben (58) der Kolben/Zylinder-Einheit (56) den Zylinderraum (60) in eine mit Druckmittel vom Hauptbremszylinder (14) beaufschlagte Primärseite und eine, eine Rückstelleinrichtung (64) für den Kolben (58) aufnehmende Sekundärseite teilt, **dadurch gekennzeichnet, dass** die Sekundärseite zur Umgebungsatmosphäre hin belüftet ist.

4. Elektrohydraulische Bremsanlage nach einem der Ansprüche 1 oder 2, wobei ein Kolben (58) der Kolben/Zylinder-Einheit (56) den Zylinderraum (60) in eine mit Druckmittel vom Hauptbremszylinder (14) beaufschlagte Primärseite und eine, eine Rückstelleinrichtung (64) für den Kolben (58) aufnehmende Sekundärseite teilt, **dadurch gekennzeichnet, dass** die Sekundärseite mit einem von der Radbremse (22) wegführenden Rücklaufkanal (66) verbunden ist.

5. Elektrohydraulische Bremsanlage nach einem der Ansprüche 1 bis 4, **dadurch gekennzeichnet, dass** wenigstens das die Kolben/Zylinder-Einheit (56) steuernde Betriebsartenumschaltventil (12) als 3/2-Wege-Ventil ausgebildet ist.

## Claims

1. Electrohydraulic brake system (10) having a muscle-force-actuable auxiliary brake which has a master brake cylinder (14) and an actuation device (18) for the master brake cylinder (14), having a service brake which can be actuated by extraneous force and which has an electronic control unit (24) and a pressure-generating unit which can be driven by the control unit (24) and is composed of a drive (30) and a pressure source (28), and having a valve arrangement (12, 13) for switching the brake system (10) from the service brake state into the auxiliary brake state, which valve arrangement (12, 13) comprises in total a number of switchable operating mode switching valves corresponding to the number of brake circuits present, having at least one hydraulic wheel brake (22),
at least one device which is intermediately connected between the valve arrangement (12, 13) for switching the brake system (10) and the at least one wheel brake (22), can be actuated by the control unit (24) and has the purpose of modulating the brake pressure (36) at the wheel brake (22), and having a piston/cylinder unit (56) for simulating the pedal travel during the service brake state, which piston/cylinder unit (56) is connected to the master brake cylinder (14) in such a way that it can be shut off hydraulically in the auxiliary brake state,
wherein a line connection (54) which is provided for applying pressure medium to the piston/cylinder unit (56) is controlled by one of the operating mode switching valves of the valve arrangement (12, 13) for switching the brake system (10),
**characterized**
**in that** the operating mode switching valves of the valve arrangement (12, 13) can be driven electronically, and
**in that** a pressure sensor (72), which hydraulically monitors the shut-off function of the operating mode switching valve (12) is arranged between the operating mode switching valve (12), which controls the piston/cylinder unit (56), of the valve arrangement (12, 13) and the piston/cylinder unit (56).

2. Electrohydraulic brake system according to Claim 1, **characterized in that** the piston/cylinder unit (56) is arranged, at least together with the valve arrangement (12, 13) for switching the brake system (10), the externally drivable pressure-generating unit (28, 30) and the device for modulating the brake pressure (36) in a common hydraulic assembly (20).

3. Electrohydraulic brake system according to Claim 1 or 2, wherein a piston (58) of the piston/cylinder unit (56) divides the cylinder space (60) into a primary side to which pressure medium is applied by the master brake cylinder (14) and a secondary side which accommodates a resetting device (64) for the piston (58), **characterized in that** the secondary side is vented to the surrounding atmosphere.

4. Electrohydraulic brake system according to one of Claims 1 or 2, wherein a piston (58) of the piston/cylinder unit (56) divides the cylinder space (60) into a primary side to which pressure medium is applied by the master brake cylinder (14) and a secondary side which accommodates a resetting device (64) for the piston (58), **characterized in that** the secondary side is connected to a return duct (66) which leads away from the wheel brake (22).

5. Electrohydraulic brake system according to one of Claims 1 to 4, **characterized in that** at least the operating mode switching valve (12) which controls the piston/cylinder unit (56) is embodied as a 3/2-way valve.

## Revendications

1. Système de freinage électrohydraulique (10) comprenant un frein auxiliaire pouvant être actionné par la force musculaire, qui présente un cylindre de frein principal (14) et un dispositif d'actionnement (18) pour le cylindre de frein principal (14), un frein de service pouvant être commandé par une force extérieure, qui présente un appareil de commande électronique (24) et une unité de génération de pression commandable par l'appareil de commande (24) constituée d'un entraînement (30) et d'une source de pression (28), et un agencement de soupape (12, 13) pour faire commuter le système de freinage (10) de l'état de frein de service à l'état de frein auxiliaire, lequel comprend dans l'ensemble un nombre de soupapes commutables pour la commutation entre des types de modes qui correspond au nombre des circuits de freinage présents,
comprenant au moins un frein de roue hydraulique (22),
au moins un système de modulation de la pression de freinage (36) au niveau du frein de roue (22) commandable par l'appareil de commande (24), interposé entre l'agencement de soupape (12, 13) pour faire commuter le système de freinage (10) et l'au moins un frein de roue (22), et une unité cylindre-piston (56) pour simuler la course de la pédale pendant l'état de frein de service, laquelle est connectée au cylindre de frein principal (14) de manière verrouillable hydrauliquement dans l'état de frein auxiliaire, une conduite de liaison (54) alimentée en fluide sous pression pour solliciter l'unité cylindre-piston (56) étant commandée par l'une des soupapes de commutation entre les types de modes de l'agencement de soupape (12, 13) en vue de faire commuter le système de freinage (10),
**caractérisé en ce que**
les soupapes de commutation entre les types de modes de l'agencement de soupape (12, 13) peuvent être commandées électroniquement et
entre la soupape de commutation entre les types de modes (12) de l'agencement de soupape (12, 13) commandant l'unité cylindre-piston (56) et l'unité cylindre-piston (56) est disposé un capteur de pression (72), qui contrôle hydrauliquement la fonction de verrouillage de la soupape de commutation entre les types de modes (12).

2. Système de freinage électrohydraulique selon la revendication 1, **caractérisé en ce que** l'unité cylindre-piston (56), au moins conjointement avec l'agencement de soupape (12, 13) pour faire commuter le système de freinage (10), avec l'unité de génération de pression (28, 30) pouvant être commandée depuis l'extérieur, et avec le dispositif de modulation de la pression de freinage (36), est disposée dans un groupe hydraulique commun (20).

3. Le système de freinage électrohydraulique selon la revendication 1 ou 2, dans lequel un piston (58) de l'unité cylindre-piston (56) divise l'espace de cylindre (60) en un côté primaire sollicité par du fluide sous pression par le cylindre de frein principal (14) et un côté secondaire recevant un dispositif de rappel (64) pour le piston (58), **caractérisé en ce que** le côté secondaire est ventilé vers l'atmosphère environnante.

4. Le système de freinage électrohydraulique selon l'une quelconque des revendications 1 ou 2, dans lequel un piston (58) de l'unité cylindre-piston (56) divise l'espace de cylindre (60) en un côté primaire sollicité par du fluide sous pression par le cylindre de frein principal (14) et un côté secondaire recevant un dispositif de rappel (64) pour le piston (58), **caractérisé en ce que** le côté secondaire est connecté à un canal de retour (66) partant du frein de roue (22).

5. Le système de freinage électrohydraulique selon l'une quelconque des revendications 1 à 4, **caractérisé en ce qu'**au moins la soupape de commutation entre les types de modes (12) commandant l'unité cylindre-piston (56) est réalisée sous forme de soupape à 3/2 voies.
